# EUROPEAN PATENT SPECIFICATION

(11) **EP 0 594 723 B1**
(45) Date of publication and mention of the grant of the patent: **06.05.1999**
(21) Application number: 92915457.3
(22) Date of filing: 20.07.1992
(51) Int. Cl.: A23B 7/045

(54) **METHOD AND APPARATUS FOR CROP TREATMENT**
VERFAHREN UND VORRICHTUNG ZUR PFLANZENBEHANDLUNG
PROCEDE ET DISPOSITIF DE TRAITEMENT DE RECOLTES

(30) Priority: 19.07.1991 GB 91156240
(43) Date of publication of application: 04.05.1994
(73) Proprietor: LANE, Christopher Robin Charles, North Wootton, King's Lynn, Norfolk PE30 3XF (GB)
(72) Inventor: LANE, Christopher Robin Charles, North Wootton, King's Lynn, Norfolk PE30 3XF (GB)
(74) Representative: Archer, Philip Bruce
(86) International application number: GB9201329
(87) International publication number: WO9301727

(56) References cited:
- DD-A- 260 116
- GB-A- 1 489 248
- US-A- 3 498 208
- US-A- 3 636 308
- US-A- 4 062 277

## Description

This invention relates to a method and apparatus for crop treatment, for raising the temperature of a stored crop of potatoes. The invention is concerned not only with crop treatment, to raise crop temperature, but also with crop storage and handling.

Present commercially-used arrangements for the storage of potatoes involve the bulk storage of the crop in boxes or containers, for example at three to four degrees centigrade, and the subsequent warming of the crop prior to handling. Thus, the present commercial arrangements for effecting these temperature changes are carried out in bulk by means of cold air and warm air supply systems.

Thus, harvested potatoes are stored in individual potato boxes which are stacked in vertical and horizontal alignment to produce stacks containing tens of thousands of tons of potatoes. The temperature in these potato stores is carefully controlled by means of a cold air supply system from a refrigeration unit. The cold air is ducted through the stacks of potato boxes from one end of the stack, lengthwise thereof, through ducts constituted by the fork-lift sockets defined in the base of each potato box. The ends of these ducts are plugged with a foam material, and thus the cold air flow proceeds laterally of these ducts and into the boxes themselves, and hence amongst the potatoes stored therein. Such arrangements are widely used and have been thus used for a period of years, and represent a substantial investment so far as the potato handling industry is concerned.

### DAMAGE RANGE

Potatoes thus-stored are extremely vulnerable to mechanical damage and bruising while at the storage temperature. This "damage range" of temperatures extends from just above freezing (usually about three or four degrees centigrade) upwards to seven degrees centigrade, above which the potatoes can be handled and packed. In the present application, the expression "damage range" is to be interpreted accordingly, and covers the temperature range of 3°C to 7°C

### PRIOR ART

The presently commercially used arrangements for raising the temperature of potatoes from their storage temperature to a non-bruising packing temperature of for example nine to ten degrees centigrade, is as follows. The potatoes have been stored in bulk, as described above, using a refrigerated air supply to maintain the storage temperature of the potatoes for as long as required. Accordingly, a substantially similar arrangement is employed for raising the temperature of the potatoes when required for use. Thus, air is supplied to a stack of potato boxes using a ducted arrangement substantially as described above, and with an appropriate air temperature whereby the potatoes are warmed as fast as can be acceptably achieved.

However, the shortcomings of this previously commercially used system of air warming for the cold-stored potatoes include, notably, the extremely slow rate of warming of the crop, requiring for example two to three days to achieve the non-bruising packing temperature of nine to ten degrees centigrade. As a result, an urgent requirement for crop cannot possibly be met, except with a delay of two to three days. Thus, when a supermarket decides to reject a delivered load of potatoes, for example on quality grounds, a packer will be faced with a request for a replacement load, and unless he has the particular requested variety available at a temperature above the damage range, it will be impossible for him to meet this requirement except with a two to three day time lag, which is obviously completely unacceptable to a supermarket. This state of affairs has existed for a period of years, and is apparently accepted as an aspect of the potato handling industry.

Further shortcomings of the presently existing system for potato warming include the fact that the warning process is relatively non-even, due to the fact that air tends to confine its flow paths to preferred routes. As a result, even after two or three days, there are present "cold-spots" in which the potatoes are below the packing temperature and the potatoes in these cold spots therefore are easily damaged.

Other aspects of the presently commercially used system for warming potatoes are its relatively high costs and its inefficiency. These arise largely from the nature of the process. The need to treat the boxes of potatoes in bulk has been explained above and is due to the relatively long processing time involved, whereby the only way to achieve acceptable throughput is by simultaneously treating a large number of boxes of potatoes. Claim 1 starts from this method as disclosing the features of the pre-characterising portion of the claim

There is described in EP 0 174 065A a method of treatment of temperature sensitive diseases, such as blackleg and soft rot, in potato tubers. The method comprises the steps of grading the tubers according to size, whilst the tubers are at or below ambient temperature (4°C to 30°C), and then transferring them to a thermal treatment zone comprising a water tank maintained at a temperature of between 45°C to 65°C.

The tubers are conveyed through the thermal treatment zone on an endless conveyor belt, which includes means which cause the tubers to tumble and roll as they are conveyed through the treatment zone. The tubers are retained in the water for a period of time sufficient to kill the disease.

This document does not address the problem of mechanical damage of potatoes if they are handled within the relatively much cooler damage range of the temperatures used for the bulk storage of potatoes. Nor does it describe apparatus enabling the crop to be handled in bulk within the damage range of temperature, thus minimising the bruising and damage caused by unloading, grading and other handling operations, as would arise in the case of use of the method and apparatus of this prior patent, in which the potatoes are de-boxed and handled in an individual manner before they are treated with water.

There is described in US 2,968,568 a pre-storage treatment for soft fruit, such as peaches. Fresh peaches are chilled immediately upon harvesting from a field harvesting temperature of about 30°C to a temperature close to freezing in order to maintain the freshness of the fruit.

As each peach is harvested, it is individually placed, stem downwards, in its own storage cup which in turn is placed in a storage box. The cups of peaches are stacked in the box in layers, preferably with fibreboard dividers between each layer. The filled boxes are then passed through a tank of chilling water at a temperature as far below the fruit temperature as possible and therefore as close as possible to 0°C to reduce the temperature of the fruit, and the treated box is then refrigerated.

When the box is passed through the water, a small amount of water is retained by each cup and when the fruit is subsequently refrigerated, this water is gradually absorbed through the stem into the fruit and sustains the fruit in a fresh condition for longer than fruit not treated by such a method prior to storage.

This document relates to the pre-storage cooling of peaches and does not address the problem of raising the temperature of and handling potatoes after storage at a temperature in the damage range.

Accordingly, I have identified a need for improvements in the method and apparatus for raising the temperature of potatoes, from a storage temperature to a temperature at which the potatoes can be safely handled.

I have established that when potatoes are in the damage range of temperatures, they can only be handled as complete boxes and not as individual potatoes at all, otherwise unacceptable damage results. Accordingly, it is impossible to remove the potatoes from their individual potato boxes.

Thus, objects of the invention include a method and apparatus using such method for increasing the rate at which potatoes can be raised in temperature from a storage temperature, and/or providing improvements in the efficiency of such a process, and/or offering one or more other improvements as discussed herein, or generally.

According to the invention there is provided a method and apparatus for raising the temperature of a stored potatoes as defined in the accompanying claims.

I have discovered that potatoes can be much more rapidly warmed from their storage temperature to a temperature at which they can be handled, by using water as the medium for warming the crop.

To the best of my knowledge, water has never been used previously for warming potatoes in this way. Crops such as potatoes have been stored dry and in bulk, and in an unwashed state. Potatoes, for example, are washed individually before sale to supermarkets, and it is believed that there is a prejudice against an intermediate in-bulk (in the sense of within a potato box) water treatment stage, whereby the advantages of water treatment have been entirely overlooked previously.

### TREATMENT TEMPERATURE

The water temperature may be from ten to twenty degrees centigrade, preferably from thirteen to eighteen degrees centigrade, and more preferably still from fourteen to sixteen degrees centigrade. The crop is preferably totally immersed in the water. A further preferred feature is that the water flows over the crop. For a single box of potatoes containing one tonne of potatoes, the water flow rate may be from ten to sixty litres per second, preferably from fifteen to fifty five litres per second, and more preferably still forty to fifty litres per second.

The times and temperatures should be arranged so that the potato surface temperature is raised from the cold store temperature to the range of eight to twelve degrees centigrade, and preferably nine to ten degrees centigrade.

### DEPTH OF WARMING

The depth to which the potatoes are warmed to the above temperatures should be from 5 to 10 millimetres, prior to removal from the warming water. Obviously, a greater depth of warming may be used if desired, but the above range is sufficient to provide protection for the crop from knocks and bounce in a normal production line.

In a preferred embodiment, potatoes stored in a cold store in a potato box are removed from the cold store, for example by means of a fork-lift truck, and taken directly to water warming apparatus and placed therein by means of a hoist, or by means of a conveyor system. Pump means produces a flow rate within the ranges quoted above, and when the crop has reached the temperatures indicated above, the box is removed,

The pump means is capable of handling solid matter dispersed in the water, including soil and small pea stones and crop particles. Preferably a screen or filter is provided, however, to remove at least part of such solid matter.

In the preferred embodiment, the water is contained within a tank unit having water heating means, and in which said pump means is connected to the tank through suction and pressure-side connections. The water tank is constructed so as to permit a conventional fork-lift truck to manipulate the potato containers into the water, and subsequently out again in a direct and simple manner. Alternatively, hoist means may be provided.

Lid or cover means is provided to cover the top of the potato containers to prevent potatoes floating out. The lid means may be suitably apertured to permit fluid flow therethrough.

### TIME OF TREATMENT

By the use of water as the fluid treatment medium, advantage is taken of the inherently higher thermal capacity of water, as compared with air, and likewise the inherent, indeed inevitable, fact that water will fill all the spaces between individual potatoes, and around them when they are immersed in a body of water, unless some specific means positively prevents entry of the water into those places. Accordingly, a simple and very direct and positive means for conveying heat to the crop to be warmed is provided in an extremely simple and relatively inexpensive form. In view of the tremendous advantages arising in terms of reduction of the treatment time from between 48 and 72 hours, to under one hour, eg approximately 30 minutes, without any significant offsetting disadvantages, it is apparent that there has been a prejudice against a step of this kind leading to the conclusion that the step in itself is a non-obvious one to take.

By employing a technique in which the crop is submerged in a body of water which is circulated, the heat flow and thermal equalisation tendencies resulting from the use of water as a heat transfer medium, are directly maintained. By moving the crop container through the body of water on a conveyor, and particularly with a counter-current water flow, these advantages are accentuated. By employing a continuous process technique in which successive containers pass progressively through the body of water, a production technique is provided enabling the high throughput characteristics inherent in the invention to be maximised.

The use of individual boxes of potatoes for thermal treatment on a one-off basis permits the advantages of the water treatment to be produced in a simple manner. This arrangement is by no means suggested by the prior-art box-stacking technique in which a force-feed of air through the boxes is produced in a multi-box manner. This technique is not needed with water treatment since the inherent nature of water renders such a force-feed system unnecessary.

Embodiments of the invention will now be described by way of example with reference to the accompanying drawings in which :-
Fig 1 shows, in block diagram form, the complete process for treatment and handling of a potato crop from the stored condition to the packed condition;
Fig 2 shows, diagrammatically, treatment of a cold-stored box of potatoes in a body of water, in a first embodiment; and
Fig 3 shows a continuous process method of treatment of cold-stored potatoes boxes according to the invention; and
Fig 4 shows an embodiment in which the potatoes are sprayed instead of immersed.

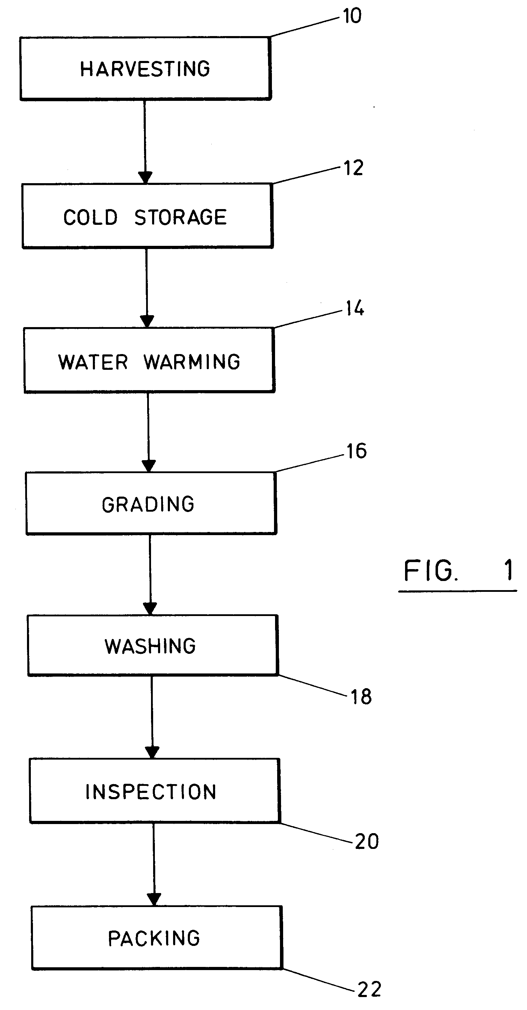

As shown in Fig 1, the sequence of operations for the provision of potatoes in a graded and washed and packed condition comprises the steps of harvesting 10, cold storage 12, water warming 14, grading 16, washing 18, inspection 20, and packing 22.

Harvested potatoes from step 10, are delivered to a cold store and stored in potatoes boxes of dimensions of 6 foot by 4 foot by 3 foot (183 centimetres by 122 centimetres by 91 centimetres). These boxes are of open-slatted construction to permit the free circulation of air around the potatoes during the cold storage period. The construction comprises slatted sides and a closed bottom, or a slatted bottom and closed sides. The walls of the container may be formed with additional apertures or openings to promote the free circulation of water in the water warming process described below.

The boxes of potatoes are stacked and cooled to a storage temperature of three or four degrees centigrade by circulation of refrigerated air, as described above.

The potatoes are stored in an unwashed condition, that is to say with a covering of soil, to a greater or lesser extent, depending on the harvesting and soil conditions.

When it is desired to remove the crop from cold storage for use, in step 14, the sequence of operation is as follows. Firstly, individual containers of potatoes are removed from the store. Great care is taken not to jar or jolt the potatoes in this step, otherwise they would be damaged.

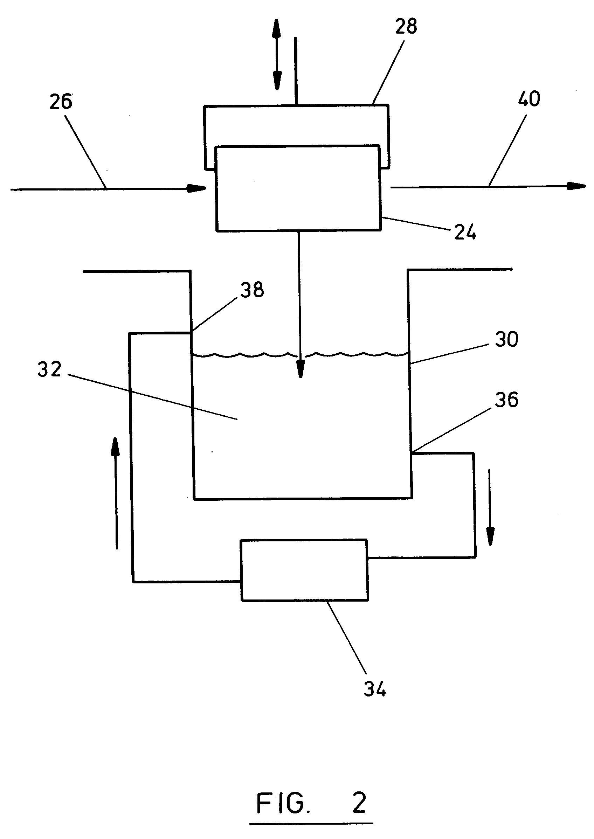

As shown in Fig 2, the entire container 24 and its potatoes is delivered via conveyor 26 (or by means of a forklift truck) to a hoist 28 which can be raised and lowered so as to place the container in a tank 30 containing a body of water 32 in which the container is fully immersed. Cover means (not shown) prevents the potatoes floating out. Tank 30 is of mild steel or stainless steel construction.

A combined screen and pump and heater 34 circulates water within tank 30 between an outlet 36 and an inlet 38. The water temperature is maintained between 14 and 16 degrees centigrade. A flow rate of 40 to 50 litres per second is provided for container 30 which contains one tonne of potatoes, initially at about three degrees centigrade

After a treatment time of 30 to 60 minutes, preferably about 40 to 50 minutes, the container 24 is removed and delivered in the direction 40 to the grading and washing steps 16 and 18. For those steps, the potatoes which are now outside the damage range of temperatures, are removed from the container 24.

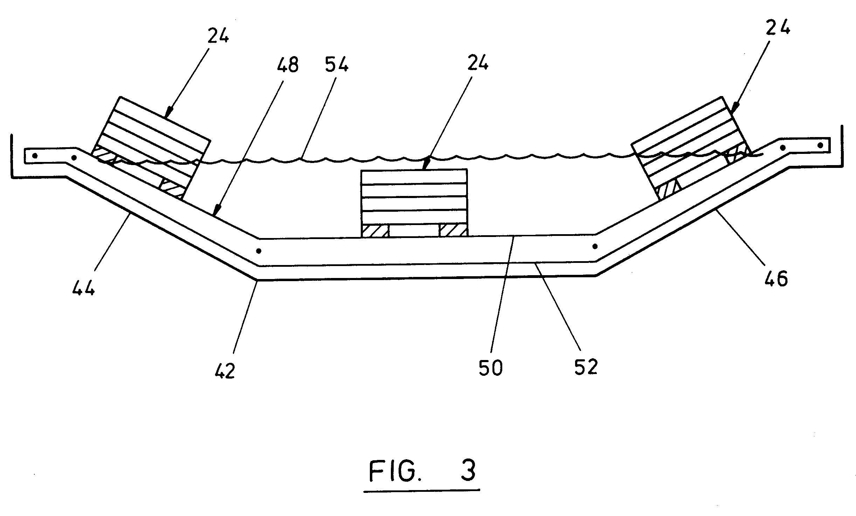

In the embodiment of Fig 3, the process is carried out on a continuous basis employing a modified tank 42 having a sloping inlet profile 44 and a corresponding sloping outlet profile 46. A conveyor 48 which circulates in a continuous path having a conveying run 50 and a return run 52 conveys containers 24 (having the same construction as in Fig 2) down into the body of water 54. The containers are progressively carried through the body of water. Cover means (not shown) above the containers prevents the potatoes floating out during treatment. The rate of conveying is such that the residence time is the required period of between 30 to 60 minutes. The water temperature is maintained as the in preceding embodiment by a circulation technique employing a pump and heater. The direction of flow is counter to the direction of movement of the conveyor and containers thereon.

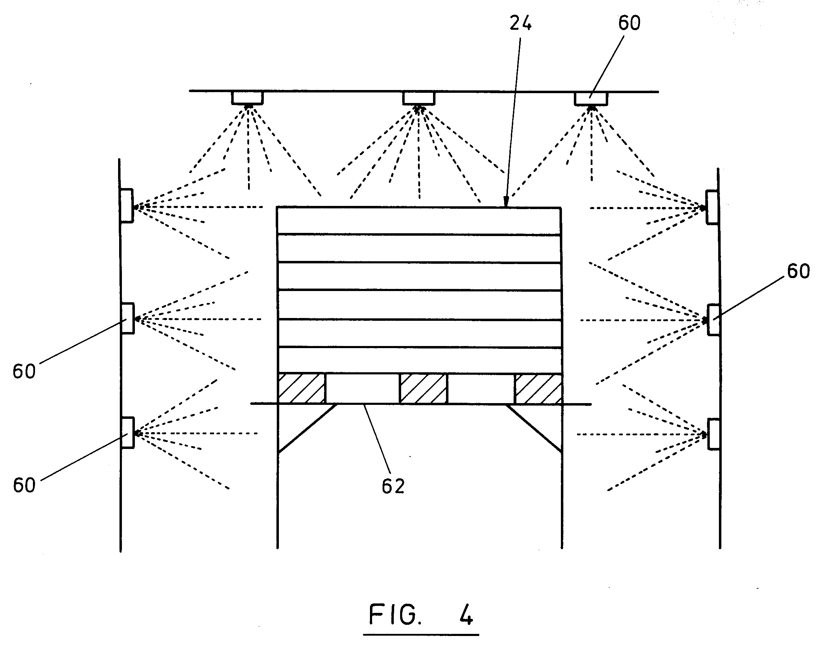

In the embodiment of Fig 4 container 24 is sprayed with water from nozzles 60 on all sides while mounted on a support 62.

Interestingly, the above embodiments provide a method and apparatus for rapid and safe warming of cold-stored potatoes. Fresh produce factories are thereby given great flexibility in coping with urgent customer demands. Uniform warming of the crop avoids the well known "cold-spotting" in individual boxes of potatoes, whereby bruising occurs. Likewise, "hot-spotting" is also avoided which has led to dehydrated potatoes and reductions in quality and shelf life of the crop. The equipment required for this process is relatively simple and easy to maintain.

Amongst other modifications which could be made in the above embodiments, while remaining within the scope of the invention are the use of :-
1 A combined heating and pre-washing step in which, once the potatoes had been raised to a temperature at which they can be moved and handled, they would be immediately subjected to a washing process;
2 In place of water, there could be employed water and additives, or other liquids, including materials for treatment of the crop in various ways, including crop preservation.

## Claims

1. A method of raising the temperature of stored potatoes, from a temperature in a damage range of 3°C to 7°C to a temperature above said damage range, comprising the steps :-
a) taking a container of potatoes which have been stored in said container in said damage range; and
b) treating said container and said potatoes with a fluid to raise the temperature of said potatoes;
characterised in that
c) said step of treating said container and potatoes with said fluid is carried out by treating with liquid at a temperature within the range of 10°C to 20°C for less than one hour to produce in said crop a surface temperature above said damage range to a depth of at least 5 millimetres.

2. A method according to claim 1 or claim characterised in that said step of treating said container and potatoes with a fluid comprises submerging said container in a body of water.

3. A method according to claim 2 characterised in that said body of water is circulated.

4. A method according to claim 3 or claim 2 characterised in that said container and said potatoes are moved through said body of water.

5. A method according to claim 4 characterised in that said container and said potatoes are moved through said body of water on a conveyor.

6. A method according to claim 4 or claim 5 characterised in that the direction of movement of said container through said body of water is opposite to the direction in which said water is circulated.

7. A method according to any one of claims 2 to 6 characterised in that said container is submerged in said body of water as part of a continuous process carried out on a sequence of such containers, and the period during which each container is submerged corresponds to the time required for treatment with said water to raise the temperature of the potatoes.

8. A method according to any one of the preceding claims characterised in that said container and its potatoes is treated with said liquid on an individual basis, with said container spaced from any other container or without any other such container.

9. The use of Apparatus for carrying out a method according to any one of the preceding claims of raising the temperature of stored potatoes, the apparatus comprising :-
a) a container for a body of liquid; and
b) means for heating said body of liquid;
characterised by
means for raising and lowering a container of crop into and out of said body of liquid.

10. The use of Apparatus according to claim 9 characterised in that said means for raising and lowering said container and crop comprises hoist means.

11. The use of Apparatus according to claim 9 characterised in that said means for raising and lowering said container comprises a conveyor and inclined ramp means for said container to enter and exit from said body of liquid.

## Patentansprüche

1. Verfahren zum Erhöhen der Temperatur gelagerter Kartoffeln von einer in einem Schadensbereich von 3°C bis 7°C liegenden Temperatur auf eine über dem Schadensbereich liegende Temperatur, mit den Schritten:
(a) Nehmen eines Behälters Kartoffeln, die in dem Behälter im Schadensbereich gelagert wurden, und
(b) Behandeln des Behälters und der Kartoffeln mit einer Flüssigkeit zum Erhöhen der Temperatur der Kartoffeln,
dadurch **gekennzeichnet**, daß
(c) der Schritt des Behandelns des Behälters und der Kartoffeln mit der Flüssigkeit durch Behandlung mit Flüssigkeit bei einer im Bereich von 10°C bis 20°C liegenden Temperatur für weniger als eine Stunde durchgeführt wird, um in der Frucht eine über dem Schadensbereich liegende Oberflächentemperatur bis zu einer Tiefe von mindestens 5 Millimetern zu erzeugen.

2. Verfahren nach Anspruch 1, dadurch **gekennzeichnet**, daß der Schritt des Behandelns des Behälters und der Kartoffeln mit einer Flüssigkeit das Eintauchen des Behälters in eine Wassermasse enthält.

3. Verfahren nach Anspruch 2, dadurch **gekennzeichnet**, daß die Wassermasse zirkuliert wird.

4. Verfahren nach Anspruch 2 oder 3, dadurch **gekennzeichnet**, daß der Behälter und die Kartoffeln durch die Wassermasse bewegt werden.

5. Verfahren nach Anspruch 4, dadurch **gekennzeichnet**, daß der Behälter und die Kartoffeln auf einem Förderer durch die Wassermasse bewegt werden.

6. Verfahren nach Anspruch 4 oder 5, dadurch **gekennzeichnet**, daß die Bewegungsrichtung des Behälters durch die Wassermasse der Zirkulationsrichtung des Wassers entgegengesetzt ist.

7. Verfahren nach einem der Ansprüche 2 bis 6, dadurch **gekennzeichnet**, daß der Behälter in die Wassermasse als Teil eines kontinuierlichen, für eine Folge solcher Behälter durchgeführten Prozesses eingetaucht wird, wobei die Dauer des Eintauchens eines jeden Behälters der Zeit entspricht, die für die Behandlung mit Wasser zum Erhöhen der Temperatur der Kartoffeln benötigt wird.

8. Verfahren nach einem der vorhergehenden Ansprüche, dadurch **gekennzeichnet**, daß der Behälter und dessen Kartoffeln mit der Flüssigkeit einzeln behandelt werden, wobei der Behälter von jedem anderen Behälter beabstandet ist oder sich kein anderer solcher Behälter dort befindet.

9. Vorrichtung zum Durchführen eines Verfahrens nach einem der vorhergehenden Ansprüche zum Erhöhen der Temperatur gelagerter Kartoffeln mit
a) einem Behälter für eine Wassermasse, und
b) Mitteln zum Erhitzen der Wassermasse,
**gekennzeichnet** durch
Mittel zum Heben und Senken eines Behälters Früchte in die Wassermasse und aus dieser heraus.

10. Vorrichtung nach Anspruch 9, dadurch **gekennzeichnet**, daß die Mittel zum Heben und Senken des Behälters und der Frucht Hubmittel enthalten.

11. Vorrichtung nach Anspruch 9, dadurch **gekennzeichnet**, daß die Mittel zum Heben und Senken des Behälters einen Förderer und eine Schrägrampe zum Einführen und des Behälters in die Wassermasse und zu seinem Ausführen enthalten.

## Revendications

1. Procédé d'élévation de la température de pommes de terre entreposées, d'une température comprise dans une plage de températures défavorable, allant de 3°C à 7°C, à une température au-dessus de ladite plage défavorable, comprenant les étapes consistant à :
a) prendre une caisse de pommes de terre qui ont été stockées dans ladite caisse dans ladite plage défavorable ; et
b) traiter ladite caisse et lesdites pommes de terre avec un fluide pour élever la température desdites pommes de terre ;
caractérisé en ce que
c) ladite étape de traitement de ladite caisse et desdites pommes de terre avec ledit fluide est effectuée par un traitement employant un liquide à une température comprise dans la plage de 10 à 20°C pendant plus d'une heure afin de générer dans lesdites récoltes une température de surface supérieure à ladite plage défavorable jusqu'à une profondeur d'au moins 5 millimètres.

2. Procédé selon la revendication 1, caractérisé en ce que ladite étape de traitement de ladite caisse et desdites pommes de terre avec un fluide comprend l'étape consistant à immerger ladite caisse dans une masse d'eau.

3. Procédé selon la revendication 2, caractérisé en ce que ladite masse d'eau est mise en circulation.

4. Procédé selon la revendication 3 ou la revendication 2, caractérisé en ce que ladite caisse et lesdites pommes de terre sont déplacées à travers ladite masse d'eau.

5. Procédé selon la revendication 4, caractérisé en ce que ladite caisse et lesdites pommes de terre sont déplacées à travers ladite masse d'eau sur un transporteur.

6. Procédé selon la revendication 4 ou la revendication 5, caractérisé en ce que la direction de déplacement de ladite caisse à travers ladite masse d'eau est opposée à la direction dans laquelle ladite eau est mise en circulation.

7. Procédé selon l'une quelconque des revendications 3 à 6, caractérisé en ce que ladite caisse est immergée dans ladite masse d'eau en tant que partie d'un processus continu effectué sur une succession de caisses de ce type, et en ce que la période pendant laquelle chaque caisse est immergée correspond à la durée nécessaire pour que le traitement au moyen de ladite eau élève la température des pommes de terre.

8. Procédé selon l'une quelconque des revendications précédentes, caractérisé en ce que ladite caisse et ses pommes de terre est traitée avec ledit liquide de manière individuelle, ladite caisse étant espacée de toute autre caisse ou de toute autre caisse de ce type.

9. Utilisation de l'appareil pour mettre en oeuvre un procédé, selon l'une quelconque des revendications précédentes, d'élévation de la température de pommes de terre entreposées, l'appareil comprenant :
a) un conteneur destiné à recevoir une masse de liquide ; et
b) des moyens pour chauffer ladite masse de liquide ;
caractérisée par
des moyens permettant de relever et d'abaisser une caisse de récoltes de et dans ladite masse de liquide.

10. Utilisation de l'appareil selon la revendication 9, caractérisée en ce que lesdits moyens pour relever et abaisser ladite caisse et lesdites pommes de terre comprennent des moyens de levage.

11. Utilisation de l'appareil selon la revendication 9, caractérisée en ce que lesdits moyens pour relever et abaisser ladite caisse comprennent des moyens de transporteur et de rampe inclinée pour permettre à ladite caisse d'entrer et de sortir de ladite masse de liquide.
